# EUROPEAN PATENT APPLICATION

(11) **EP 0 681 268 A1**
(43) Date of publication of application: **08.11.1995**
(21) Application number: 95200903.3
(22) Date of filing: 10.04.1995
(51) Int. Cl.: G06T 5/00

(54) **Automatic image correction using pattern recognition techniques**

(30) Priority: 22.04.1994 US 232965
(71) Applicant: EASTMAN KODAK COMPANY, Rochester, New York 14650-2201 (US)
(72) Inventor: Schwartz, Michael Steven, c/o Eastman Kodak Co., Rochester, New York 14650-2201 (US)
(74) Representative: Wagner, Karl H., Dipl.-Ing.

(57) **Abstract**

Apparatus and method for automatically adjusting an image in a way which takes into account the semantic content of the image by making use of a pattern recognition subsystem to determine the semantic content of the image, wherein the pattern recognition subsystem detects the presence and location of color-significant objects, and gives this information to a transform generator, which computes the optimal transform for enhancing the image. The apparatus and method includes a device adapted to store digital images, a pattern analyzer adapted to detect the presence and location of significant objects within a digital image, a transform generator adapted to derive image transforms in response to the detection of a significant object within a digital image by the pattern analyzer, and a transform image adapted to make modifications to stored digital images.

## Description

### BACKGROUND OF THE INVENTION

### Technical Field

This invention relates generally to electronic image processing, and more particularly to methods and apparatus for adjusting tonality, color, and sharpness of digital images.

### Background Art

People who make use of digital images often find it desirable to make adjustments to those images. These adjustments may be required because of defects in the process by which those images were acquired, or they may be necessary because of other perceived quality defects in the images. The types of adjustments typically made are of tonality, of color, and of sharpness.

There are a number of methods conventionally used for performing these adjustments. One method involves displaying the image on a color monitor, and allowing an operator to use various controls to input corrections to the observed image. This has the advantage of allowing for human judgment; but has the disadvantage of requiring an operator to spend a relatively large amount of time making corrections to each image.

Another class of conventional methods involve analyzing the distribution of colors in the image and making adjustments based on that distribution. An example would be the use of histograms for detecting and setting highlights. These methods are potentially faster and more efficient than those requiring operator-involvement, but do not take into account the fact that different parts of an image often need to be processed differently according to the object they represent. For example areas of an image representing people typically need to be processed differently from areas representing less important objects. A variation on this approach is proposed in U.S. Patent No. 5,083,154, issued to T. Terashita, in which an exposure curve derived from image data can be analyzed by a neural network. Although the approach uses pattern recognition methods, the patterns it recognizes are from an abstract curve rather than being directly from the image data. Thus, no attempt is made to analyze the image for semantic content.

A third class of conventional methods makes assumptions about image content. Such methods assume, for example, that bluish areas near the tops of images are sky and should therefore be sky-blue, while greenish areas near the bottom of images are assumed to be grass. Those methods have the advantage of taking scene content into account, but can be fooled by atypical scenes or by scenes that need so much correction that the system cannot recognize the intended color.

Another approach to this problem is to assume that any object whose color is close to some predetermined target color is a specific type of object. A traditional approach to sharpening, for example, applies less sharpening to the red color channel than to the green and blue channels thereby sharpening fleshtones less than other colors. For example, U.S. Patent No. 5,130,935, which issued to H. Takiguchi on July 14, 1992, discloses a sophisticated version of this approach which detects fleshtones by assuming that they are near a predetermined value in color space. A weakness with this approach is that it is difficult to predict what the actual color of a fleshtone will be in a particular image. The various tans, browns and pinks which constitute human fleshtones cover a very wide range in color space; this range also includes a large number of other objects. In addition, a particular image may have a color cast which needs to be corrected, so that the incoming fleshtones are actually greenish or purple.

U.S. Patent 4,978,990, issued to M. Yamasaki, proposes an apparatus for exposure control for a camera in which the exposure control values depend on signals from the main part of an object rather than from the background. The apparatus uses a neural network to identify the "main part" of the object. However, it does not distinguish between types of objects, nor is it clear from the description how the main part is to be defined or described.

### DISCLOSURE OF THE INVENTION

It is an object of the present invention to provide for automatically adjusting an image in a way which takes into account the semantic content of the image.

It is another object of the present invention to automatically enhance digital images by making use of a pattern recognition subsystem to determine the semantic content of the image.

It is still another object of the present invention to automatically enhance digital images by making use of a pattern recognition subsystem to determine the semantic content of the image, wherein the pattern recognition subsystem detects the presence and location of color-significant objects.

It is yet another object of the present invention to automatically enhance digital images by making use of a pattern recognition subsystem to determine the semantic content of the image, wherein the pattern recognition subsystem detects the presence and location of color-significant objects, and gives this information to a transform generator, which computes the optimal transform for enhancing the image.

In accordance with these and other objects, an electronic image processing apparatus and method for adjusting a digital image includes a device adapted to store digital images, a pattern analyzer adapted to detect the presence and location of significant objects within a digital image, a transform generator adapted to derive image transforms in response to the detection of a significant object within a digital image by the pattern analyzer, and a transform image adapted to make modifications to stored digital images.

In a preferred embodiment of the present invention, the pattern analyzer is adapted to detect the presence and location of color-significant objects within a digital image. The pattern analyzer may be a neural network trained to recognize significant objects within a digital image. The transform generator may be adapted to derive image transforms in response to the detection of a color-significant object within a digital image by the pattern analyzer.

The invention, and its objects and advantages, will become more apparent in the detailed description of the preferred embodiments presented below.

### BRIEF DESCRIPTION OF THE DRAWINGS

In the detailed description of the preferred embodiments of the invention presented below, reference is made to the accompanying drawings, in which:
Figure 1 shows the basic system of the present invention and how data flows through the system; and
Figure 2 is a logic flow chart illustrating the flow of data through the system of Figure 1.

### BEST MODE FOR CARRYING OUT THE INVENTION

The present description will be directed in particular to elements forming part of, or cooperating more directly with, apparatus in accordance with the present invention. It is to be understood that elements not specifically shown or described may take various forms well known to those skilled in the art.

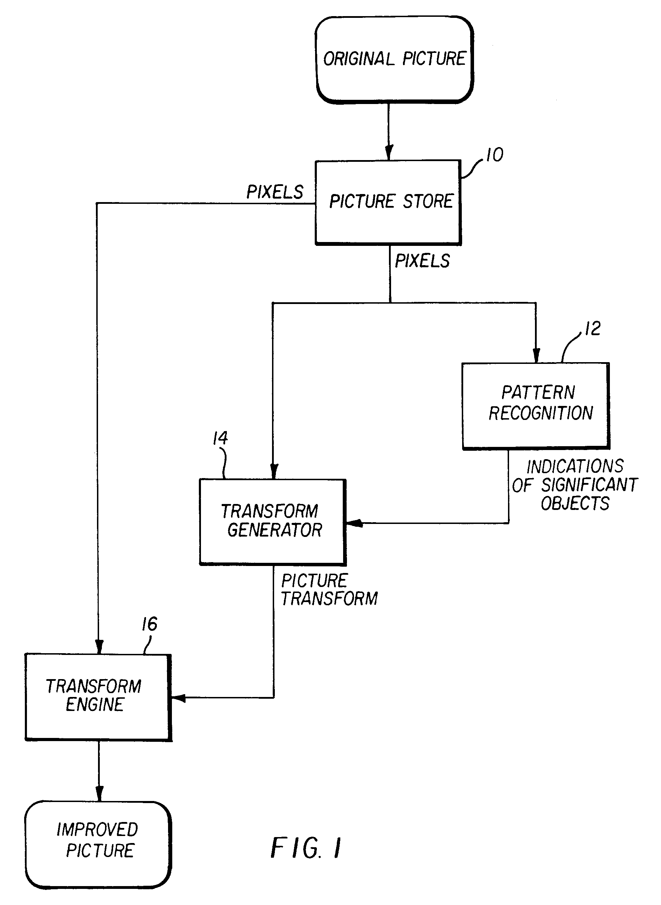

Referring to Figure 1, invention identifies color-significant features, and uses that information to remap the image. A color-significant feature is a feature in an image whose nature gives clues to how the color or sharpness of the image should be transformed. An example would be a human face. Another example would be a specular highlight. Knowing that a particular collection of pixels constitute a face gives information about how those pixels, as well as the image as a whole should be remapped.

The illustrated embodiment of the present invention includes four subsystems shown in Figure 1. The first subsystem is a device 10 which can store digital images. It may, but does not necessarily have to contain apparatus for displaying those images. The second subsystem includes a pattern analyzer 12 which can detect the presence and location of color-significant objects within an image. This second subsystem could be implemented as a neural network which is trained to recognize significant objects. The third subsystem 14 uses the color-significant features detected by the second subsystem to derive color and sharpness transforms. This subsystem effectively contains a set of rules describing how the image should be processed in the presence of significant objects. An example of such a rule would be "*If sharpening an image, do not sharpen faces*". Third subsystem 14 uses these rules to determine a set of optimal transformations for the image, which would then be applied by a fourth subsystem 16 adapted to make modifications to stored images. The fourth subsystem could be implemented as a computer program.

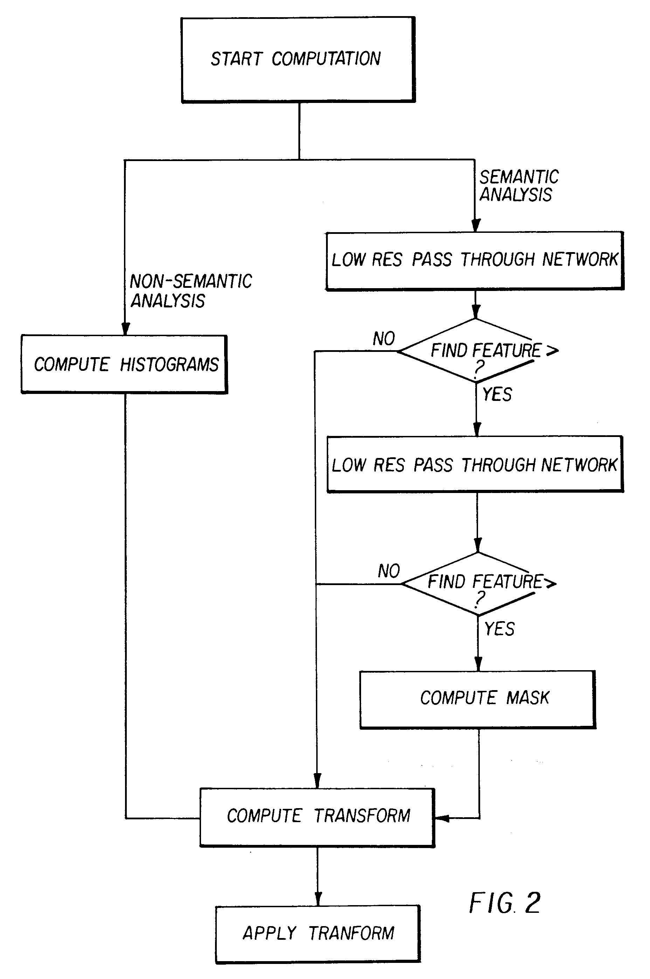

Figure 2 is a logic flow chart illustrating the flow of data through the system of Figure 1. First, an image is received from a disk or other source. If this image is a raw scan, it is corrected for color according to the known characteristics of the scanner. The image is then put through a pattern analyzer, which detects color-significant features. A description of the extracted features, together with the image itself, is passed to the transformation generator, which computes the optimal transformation for that image. Finally, the transformation is applied to the image. The transformed image can then be passed through an output color transformation which corrects for the known characteristics of an output device and printed out.

The first and fourth subsystems could be implemented as a computer containing a hard drive for storing images, and a CPU or other processing unit for performing computations on those images. In the preferred implementation, the subsystem consists of a Macintosh II/fx computer containing a 300 MB hard drive for image storage. A standard Macintosh monitor can be used for image display in situations where the operator wishes to check the effectiveness of the automatic operation or to make further modifications to the image being processed. In order to provide calibrated image data to the system a Kodak Color Management system is installed on the preferred system. This color management system assures that the images transformed by this system are represented in terms of calibrated color. The system represents both calibration transformations and color modification transformations as Precision Transforms. The reader is referred to U.S. Patent No. 5,208,911, which issued to G. Newman et al. on May 4, 1993, for a fuller description of these transforms. The disclosure of the Newman et al. patent is hereby specifically incorporated herein by reference. A hardware accelerator board associated with this system is preferably used for enhancing the speed of the color transformations.

The second subsystem can be implemented as a computer program using eigenvector or template matching techniques, or as a neural network. Methods for building such a subsystem are well known to those skilled in the art. An example of a system which can detect faces is given by U.S. Patent 5,164,992, issued to M. Turk. Other examples can be seen from U.S. Patent 4,906,940, issued to R. Greene and from U.S. Patent 5,287,272, issued to Rutenburg et al., which makes use of a commercially available neural network.

In the preferred implementation the second subsystem is a neural network. The network is trained by presenting it with a series of images in which the feature to be detected is present, together with a series in which the feature is absent. This training is done by the manufacturer of the system at the factory. The network coefficients produced by this procedure can be downloaded onto existing systems, so that improvements in the training procedure can be implemented on existing systems.

The third subsystem provides both filtering and color adjustment transformations. In the preferred implementation, the subsystem produces a color transformation by using information from the second subsystem to produce Precision Transforms, which are then applied to the image being corrected.

In the preferred implementation, the third subsystem uses the fact that a color-significant object is within a particular region to produce a color mask. It does this by measuring the hue, saturation, and luminance distribution within the detected region and making use of those distributions as is described in my commonly assigned, co-pending U.S. Patent Application Ser. No. 07/983,152, filed on November 30, 1992, the disclosure of which is specifically incorporated herein by reference. The color mask could be restricted to the image region in which the feature was detected, or it could apply to all parts of the image where there is a color which is the same as the color of the detected feature.

One use of this color mask is in the construction of sharpening filters. It is well known that people prefer to see a lot of digital sharpening on inanimate objects, but very little sharpening on people. Therefore a mask based on the detection of faces could be used to control the values of a sharpening filter. Where the mask values are low, indicating no face, a set of filtering coefficients which boost high frequencies are applied; and where mask values are high, a different set of coefficients are used.

In a similar way, people are known to prefer that inanimate objects be made highly saturated, but still prefer that human beings look more natural. Therefore, a mask based on the detection of faces could be used to control a saturation transformation. This transformation would boost the saturation for colors where the mask values are high, while leaving it untouched where they are low.

It is also possible to combine output from the third subsystem with determinations made through other means. For example, a histogram-based method for determining color balance might come up with more than one possible remappings. The system could choose among these possible remappings by rejecting any remapping which causes faces in the image to become an unnatural color. An example is the automatic color balance algorithm described in my commonly assigned, copending U.S. Patent Application Ser. No. 08/114,715 filed on August 31, 1993, the disclosure of which is specifically incorporated herein by reference. In this method the amount of color cast in an image is determined by measuring and analyzing its distribution of chrominances. The method allows for the incorporation of an apriori estimate about the most likely location of neutral. This estimate could be supplied by detecting a face, making a rough assumption about its color, and then computing the offset between the assumed color and the actual measured color in the image. Because this estimate would only influence the final determination rather than controlling it absolutely, it would not have to be exactly accurate. Accordingly, the variety of human fleshtones would not effect its validity.

There are two methods in which this invention uses the detection of color-significant features to influence the remapping of tonality. The first is in the remapping of highlights. In general, an image should be remapped so that its brightest point has a high luminance value. The best target for that brightest point depends on its nature. If the brightest point is a specular highlight, it should be remapped to maximum brightness; but if the brightest point is a diffuse white, it should be remapped to a somewhat lower value. This invention distinguishes between these two cases in the following way. First, it finds the location of the brightest point in the image. Then, it presents the region around this point to the neural network. In this case the network is loaded with coefficients which have been derived through training sessions in which it was taught to recognize diffuse and specular highlights.

A network which recognizes people can also be used to influence the shape of a tonal curve. People tend to prefer a moderate amount of contrast in fleshtones; enough so that the figures are rounded but not enough to make them harsh. This invention therefore remaps the contrast within regions which contain fleshtone by computing a brightness histogram within the region defined by the mask, and by then adjusting the tonality within that region so that the width of the brightness distribution falls within a predetermined target range.

The flesh areas detected by this invention can also be incorporated into the remapping method described in my commonly assigned, co-pending U.S. Patent Applications Ser. No. 07/983,151, filed on November 30, 1992, the disclosure of which is specifically incorporated herein by reference. This method remaps image tonality so as to emphasize tonal regions which contain a relatively large amount of middle-sized detail. It does this, in part, by computing a weighting function whose value at any point depends on the amount of mid-range spectral information at that point. The present invention increases this weight by an amount proportional to the flesh mask. Thus, the modified method has more of a tendency to emphasize fleshtones.

The third subsystem can also treat the outputs of the pattern recognizer as approximate rather than as absolute determinations. For example, instead of determining that a particular location contains a face, the pattern recognition subsystem can determine that there is a calculated percentage likelihood that the image contains a face. This relative measure can then be combined in a continuous way with image transformation derived through other means.

## Claims

1. A method for performing automatic adjustments to images, said method comprising the steps of:
deriving information about the semantic content of an image; and
using the derived information to determine an optimal adjustment to the image.

2. A method for performing automatic adjustments to images, said method comprising the steps of:
storing digital images;
identifying significant objects within a stored image;
using identified significant object to derive a transformation; and
applying the derived transformation to the stored image.

3. A method as described in Claim 2 in which the derivation of the transformation uses information about the semantic content of the image.

4. A method as described in Claim 2 in which the step of identifying significant objects includes producing a relative measure of how likely it is that a particular significant object is in the stored image.

5. A method as described in Claim 2 in which the information about the presence of significant objects is in the form of a mask.

6. An electronic image processing apparatus for adjusting a digital image, said apparatus comprising:
a device adapted to store digital images;
a pattern analyzer adapted to detect the presence and location of significant objects within a digital image;
a transform generator adapted to derive image transforms in response to the detection of a significant object within a digital image by the pattern analyzer; and
a transform image adapted to make modifications to stored digital images.

7. Apparatus for performing automatic adjustments to images, said apparatus comprising:
a first subsystem adapted to store digital images;
a second subsystem including means for generating a signal identifying significant objects within a stored digital image;
a third subsystem which receives the signal from the second subsystem to derive a transformation; and
a fourth subsystem adapted to adjust the stored digital images in response to the transformation derived by said third subsystem.
